# EUROPEAN PATENT APPLICATION

(11) **EP 4 431 833 A1**
(43) Date of publication of application: **18.09.2024**
(21) Application number: 23200180.0
(22) Date of filing: 27.09.2023
(51) Int. Cl.: F24S 20/20, C02F 1/14, F03G 6/00, F24S 23/30, F24S 23/70

(54) **SYSTEM PROVIDING HEAT AND ENERGY GENERATION FROM SUNLIGHT**

(30) Priority: 17.03.2023 TR 202303005 U
(71) Applicant: Atay, Resat, Esenyurt/ Istanbul (TR)
(72) Inventor: Atay, Resat, Esenyurt/ Istanbul (TR)
(74) Representative: Yamankaradeniz, Kemal

(57) **Abstract**

The present invention is a system providing heat and/or energy generation from sunlight (GI), comprising; at least one lens (1) that focuses and concentrates sunlight (GI), at least one mirror (2) reflecting the sunlight (GI), reflecting and transmitting the focused sunlight (GI) from the lens (1) to the boiler (3), at least one boiler (3) that absorbs the concentrated beam and allows the liquid to boil, at least one steam turbine (4), which is rotated by boiling liquid/steam and provides energy.

## Description

### Technical Field

The present invention relates to a system providing heat generation from sunlight.

In particular, the present invention relates to a system to be used in the field of renewable energy/solar energy, which enables the use of heat and light obtained from solar energy for heating and energy generation.

### State of the Art

Today, there are renewable alternative systems such as solar panels and wind turbines. Disadvantages of these systems are waste and emission problems, high noise and noise problems in wind turbines. In addition, there are also space problems and these systems cannot be installed in every area. In addition, since the spaces they occupy are quite large, necessary space and cost problems arise. When the cost and the amount of energy obtained is considered, there is a tolerance in the long run. There is a very high initial production cost in such renewable energy systems. In addition, high technology and knowledge are required for maintenance, repair and follow-up. Solar panels have a very short economic life and a serious waste problem arises after they have completed their life. These materials cannot be recycled.

As a result due to the abovementioned disadvantages and the insufficiency of the current solutions regarding the subject matter, a development is required to be made in the relevant technical field.

### Object of the Invention

The present invention aims to solve the abovementioned disadvantages by being inspired from the current conditions.

The main object of the present invention is to reveal a system providing heat generation from sunlight.

Another object of the present invention is to reveal a system that does not have waste and emission problems. A lens made of glass is preferably used in the system of the present invention. There is zero emission in the system of the present invention. The space occupied by the system is much less costly and long-lasting than the state of the art. The production cost is much lower and no high technology is needed. It can be produced quickly.

In case the liquid to be used in the steam boiler in the system of the present invention, for example, is sea water, it is possible to use the water obtained as potable with the help of the distiller at the top of the steam boiler.

In order to achieve the above-mentioned objectss, a system has been developed to generate heat and/or energy from sunlight, comprising:
- at least one lens that focuses and concentrates sunlight,
- at least one mirror reflecting the sunlight, reflecting and transmitting the focused sunlight from the lens to the boiler,
- at least one boiler that absorbs the concentrated beam and allows the liquid to boil,
- at least one steam turbine, which is rotated by boiling liquid/steam and provides energy.

A preferred embodiment of the invention comprises at least one distiller that recondenses and distils the liquid obtained from the steam turbine.

The structural and characteristic features of the present invention will be understood clearly by the following drawings and the detailed description made with reference to these drawings and therefore the evaluation shall be made by taking these figures and the detailed description into consideration.

### Figures Clarifying the Invention

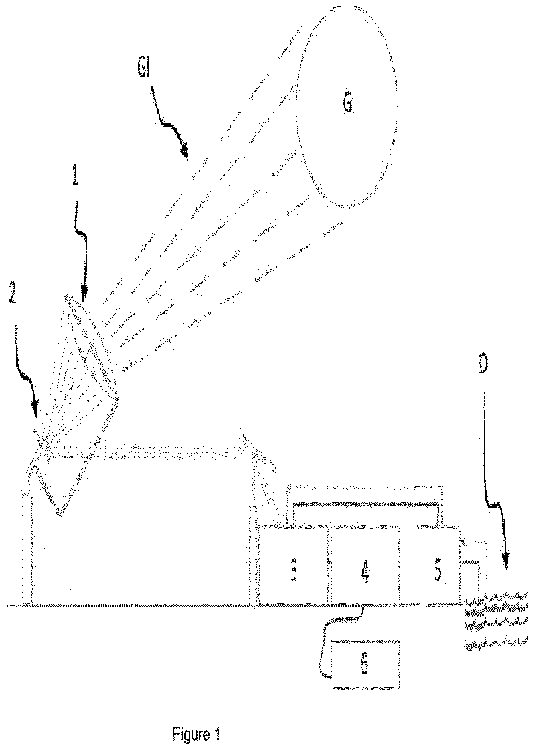

**Figure 1****,** is a representative view of the inventive system.

### Description of the Part References

- 1.: Lens
- 2.: Mirror
3. Boiler
4. Steam turbine
5. Distiller
6. Battery
- G:: Sun
- GI:: Sunlight
- D:: Sea

### Detailed Description of the Invention

In this detailed description, the preferred embodiments of the inventive system is described by means of examples only for clarifying the subject matter.

The elements and features of the system that is the subject of the invention are given below:
- Lens (1): The lens (1) is a convex lens and is preferably made of lens glass or clear plastic with a diameter of 1-2 meters. It is used to focus and concentrate sunlight (GI).
- Mirror (2): It acts as a necessary reflector to carry sunlight (GI). The mirror (2) can be made of different materials, it can also be made of sheet metal. It reflects the focused sunlight (GI) coming from the lens (1) and carries it to the steam/water boiler (3).
- Boiler (3): The steam/water boiler (3) has a structure with a dark floor, insulated from the outside, preventing heat loss to the outside. It absorbs the concentrated beam and provides boiling of the liquid.
- Steam turbine (4): The incoming steam/liquid boils and rotates the steam turbine (4) and energy is obtained in this way. Here, the heated water can both meet the need for hot water and the energy obtained will be used. The liquid obtained from the steam turbine (4) can be used potable water by being condensed and distilled again with the help of the distiller (5) (in case of using sea water in the example boiler (3)).

The beam reflecting mirror (2) and the convex lens (1) are focused on the light source, namely the sun (G). It changes angle according to the rotation of the sun (G).

## Claims

1. A system providing heat and/or energy generation from sunlight (GI), **characterized by comprising;**
- at least one lens (1) that focuses and concentrates sunlight (GI),
- at least one mirror (2) reflecting the sunlight (GI), reflecting and transmitting the focused sunlight (GI) from the lens (1) to the boiler (3),
- at least one boiler (3) that absorbs the concentrated beam and allows the liquid to boil,
- at least one steam turbine (4), which is rotated by boiling liquid/steam and provides energy.

2. System according to claim 1, **characterized by comprising;** at least one distiller (5) that recondenses and distills the liquid obtained from the steam turbine (4).
